# EUROPEAN PATENT APPLICATION

(11) **EP 4 765 513 A1**
(43) Date of publication of application: **24.06.2026**
(21) Application number: 24220922.9
(22) Date of filing: 18.12.2024
(51) Int. Cl.: H01R 13/523

(54) **FLEXIBLE ELECTRICAL CONNECTIONS FOR SUBSEA APPLICATION**

(71) Applicant: Hitachi Energy Ltd, 8050 Zürich (CH)
(72) Inventor: MISSING, Kim, 66510 Vähäkyrö (FI); VIRTANEN, Esa, 65100 Vaasa (FI); NOROLAMPI, Mika, 66440 Tervajoki (FI)
(74) Representative: Vossius & Partner Patentanwälte Rechtsanwälte mbB

(57) **Abstract**

The disclosure provides a subsea electrical connection comprising: an electrical conductor extending along an axial direction of the electrical conductor; and a first flexible bellow surrounding the electrical conductor in a radial direction perpendicular to the axial direction, wherein an inner surface of the first flexible bellow is spaced apart from the electrical conductor in the radial direction.

## Description

The present disclosure relates to subsea electrical connections, systems comprising subsea electrical connections and methods for implementing them.

The changing energy marked needs systems like offshore wind parks and the like. Such systems may have subsea electrical components. Such electrical components may be transformers, switchgear and similar. Electrical components for subsea application may be electrically connected to each other. The installation of such electrical connections are generally made on site, meaning just before the components are put into the sea. It is advantageous to have no need to adjust anything when the components are submerged in the sea and/or to have no need to lift the components out of the sea to make adjustments.

When submerged in the sea, there may be movement of the components and the electrical connections due to water currents and due to temperature gradients between the sea water (often between 0°C and 4°C) and the electrical components which generate heat.

So far, subsea electrical connections may be rigid connection chambers which are welded. Such rigid connected chambers are very expensive and need to be created individually for each connection. They have a long lead time and qualified suppliers are scarce. The rigid connection chambers are also rigid and thus do not allow for the movements of different parts.

The above-mentioned disadvantages are at least partly overcome and/or advantages mentioned herein are at least partly achieved with the features of the independent claims. Dependent claims define preferred embodiments of the present disclosure.

The present disclosure shows several subsea electrical connections and methods for implementing them. The different subsea electrical connections have some overlapping compulsory features and some overlapping optional features. Examples, alternatives, advantages and other explanations for these overlapping features are generally only explained once but also apply to the other embodiments.

The present disclosure relates to a subsea electrical connection comprising: an electrical conductor extending along an axial direction of the electrical conductor; and a first flexible bellow surrounding the electrical conductor in a radial direction perpendicular to the axial direction, wherein an inner surface of the first flexible bellow is spaced apart from the electrical conductor in the radial direction.

The electrical conductor may be a connector, a cable, a busbar, a strap or other. The axial direction of the electrical conductor may be straight or it might bend (slightly). Accordingly, the first flexible bellow may extend straight or (slightly) bend in the axial direction. The bending of the electrical conductor and the first flexible bellow may be identical or may diverge (slightly). The electrical conductor may extend along the hole length of the first flexible bellow in the axial direction. The electrical conductor may be flexible, preferably in radial directions. The term "bellow" means "bellows". However, to distinguish better between one or two bellows, the (wrong) singular is used for one bellows.

The space between the electrical conductor and the first flexible bellow may be filled with liquid, like transformer oil.

Through these features, the subsea electrical connection is flexible and can adjust to movement in the sea and/or to movement/adjustment when connecting electrical components. Thus, less or no special adjustment in producing the subsea electrical connections is necessary anymore. This makes the subsea electrical connections, inter alia, cheaper, faster available and more durable.

Various embodiments may preferably implement the following features.

Preferably, the first flexible bellow has a shape of a rippled cylinder shell.

The rippled shape may provide flexible properties of the first flexible bellow. Further, the flexible properties of the first flexible bellow may help to compensate for pressure differences between the pressure inside and outside of the first flexible bellow. The rippled form may be (alternatively or additionally) wavy.

Preferably, the subsea electrical connection further comprises a insulation directly surrounding the electrical conductor in the radial direction.

In alternative embodiments, the electrical conductor may not have an insulation around it.

There may be a bushing surrounding the electrical conductor at axial ends. Alternatively to the bushing, it may be an insulated feed through going into the vessel or enclosure (electrical component at one or both radial ends).

The bushing may be rigid on both (axial) ends. There may be copper pin(s) on one or both axial ends of the bushing/electrical conductor. The copper pin(s) may provide an electrical connection that can be secured in place after electrical components have been assembled and before the bellows are tightened together. The electrical connection is then flexible. The copper pin(s) may alternatively be made of another material, like aluminum.

Preferably, the first flexible bellow is made of metal.

The first flexible bellow may be 6MO or EN 1.4547 / SMO material. It may be made from two 0.5 mm (milli meter) sheets corrugated together and welded to an end ring that is the welded to a flange. Other alternatives are possible.

Preferably, the subsea electrical connection further comprises a second flexible bellow surrounding the first flexible bellow in the radial direction.

The second flexible bellow may (also) be connected to the flange, preferably welded, more preferably bolted. The space between the second flexible bellow and the first flexible bellow may be filled with a liquid, like transformer oil. The second flexible bellow may have a shape of a rippled (and/or wavy) cylinder shell. The second flexible bellow may be flexible. It may be bend (or straight) similar as the electrical conductor or it may diverge slightly.

Having two flexible bellows may provide a double barrier solution. It may increase durability and reliability. When one barrier (bellow) would fail, the innermost liquid (oil) is still kept clean.

Preferably, the second flexible bellow is made of rubber. The sealed intermediate volume (second space) to be compensated via the radial and axial flex of the rubber bellow.

Rubber may be advantageous as outer material, touching the sea water, to better resist the sea water (no rust etc.).

Preferably, the subsea electrical connection further comprises a conductive flexible joint positioned at the electrical conductor at one end in the axial direction.

The flexible joint may be the above mentioned copper pin. The flexible joint may extend in axial direction over the extension of the first and/or second flexible bellow. The flexible joint may extend 260 mm.

Preferably, the subsea electrical connection further comprises two end parts connected to the first flexible bellow at opposite ends of the first flexible bellow in axial direction.

Preferably, one of the two end parts is a flange.

Both end parts may be flanges. Each of the end parts may be an end ring that is the welded to a flange. Alternatively, one end part may be a flange and the other end part may be a part of one electrical component (for example a wall or connection part of a transformer or the like). The/each flange may be an SPO flange with HX metal seal. There may be an o-ring at a connection of two flanges (of two different subsea electrical connections). The o-ring may be for testing and/or improving the seal integrity.

Preferably, the first flexible bellow and the second flexible bellow are each connected to each of the two end parts to enclose a (first and/or second) space.

There may be two different spaces: one (first) space inside the first flexible bellow and another (second) space between the first and second flexible bellow. One or both of these spaces may be filled with liquid, like transformer oil.

Preferably, the subsea electrical connection further comprising a first hydraulic connection with a first valve, wherein one end of the first hydraulic connection connects to a (first) space between the electrical conductor and the first flexible bellow.

The first hydraulic connection may connect on the other side to a (pressure) compensator. This may be the same compensator used for other parts, as for example at least one of the electrical components.

The first hydraulic connection may alternatively (it may be disconnected from one and connected to another part, or it may be connected to several parts simultaneously) be connected to a vacuum pump and/or an outside container (for transformer oil). The first hydraulic connection may be configured to be used for evacuation of the (first) space to which it is connected. This may be used to take sea water, air, used transformer oil, or other material out of the space. The first hydraulic connection may also be configured to be used to fill the (first) space, for example with transformer oil. Transformer oil may be routed from a main tank volume or from an outside container.

The first hydraulic connection may further comprise a double barrier sealing with inner cap, a metal seal and out cap with an o-ring sealing. The caps may have a helium test port for final helium testing after sealing. The first hydraulic connection may comprise an autoclave port for sealing during transport.

Preferably, the subsea electrical connection further comprises a second hydraulic connection with a second valve, wherein one end of the second hydraulic connection connects to a (second) space between the first flexible bellow and second flexible bellow.

The second hydraulic connection may connect on the other side to a (pressure) compensator. This may be the same compensator used for other parts, as for example at least one of the electrical components.

The second hydraulic connection may alternatively (it may be disconnected from one and connected to another part, or it may be connected to several parts simultaneously) be connected to a vacuum pump and/or an outside container (for transformer oil). The second hydraulic connection may be configured to be used for evacuation of the (second) space to which it is connected. This may be used to take sea water, air, used transformer oil, or other material out of the (second) space. The second hydraulic connection may also be configured to be used to fill the (second) space, for example with transformer oil. Transformer oil may be routed from a main tank volume or from an outside container.

The second hydraulic connection may further comprise a double barrier sealing with inner cap, a metal seal and out cap with an o-ring sealing. The caps may have a helium test port for final helium testing after sealing. The second hydraulic connection may comprise an autoclave port for sealing during transport.

The hydraulic connections may be hydraulic passages.

Preferably, the subsea electrical connection further comprises a helium test port for Helium testing after sealing.

The helium test port may be located at the SPO flange.

Preferably, the first flexible bellow has a length of 490 mm, and a diameter of 560 mm.

Alternatively, the length may be 490 mm and the diameter 1280 mm. Other measurements are possible. Measurements may be adjusted according to needs.

Preferably, the subsea electrical connection further comprises two further electrical conductor surrounded by the first flexible bellow in the radial direction.

Such a subsea electrical connection may be configured to three phase electrical connections. All three electrical conductors may be located with a distance in radial direction between each other. There may be two or more than three electrical conductors.

The present disclosure also relates to a system comprising an above mentioned subsea electrical connection and an electrical device, wherein one end of the subsea electrical connection is connected to the electrical device.

The electrical device may be one of the mentioned electrical components. Two such systems can be electrically connected at the corresponding free ends of the corresponding electrical connections. As the electrical connections may be flexible, the connection of the two electrical connections can be easily achieved by bending them towards each other. Also, movement between the electrical devices due to current or temperature changes can be compensated.

The connection of the end of the subsea electrical to the electrical device may be welded and/or bolted.

Preferably, the electrical device is a transformer, a reactor, a switchgear, a pump, or an electrical motor of a pump or compressor or other device.

In some embodiments, the electrical device is a reactor. The transformer may be a (subsea) transformer for high voltage up to 245 kV or for medium voltage being 66 kV. The transformer may be with turbines with separate feeders that need to be able to disconnect with subsea brakers.

Preferably, the system further comprises a pressure compensator, wherein the pressure compensator is connected to the subsea electrical connection and the electrical device, and wherein the pressure compensator is configured to simultaneously compensate pressure of the electrical device and the subsea electrical connection.

The pressure compensator may be the above mentioned compensator. It may be connected to the first and/or second hydraulic connection.

The present disclosure also relates to a method for connecting two electrical devices with a subsea electrical connection each, the method comprising: placing the two electrical devices besides each other; flexing one end of each of the subsea electrical connection to make the ends connect; and locking the ends into connection.

Preferably, locking the ends is done without welding.

Preferably, the method further comprises: evacuating a space in the subsea electrical connection through an hydraulic connection; filling the space with oil through the hydraulic connection; and compensating pressure and/or volume through the hydraulic connection.

The hydraulic connection may be the first or second hydraulic connection. It may comprise a valve. The hydraulic connection may enable the volume/pressure compensation trough an externally openable valve that can be double barrier sealed after operating. Electrical connection volume/pressure compensation may happen trough a port to a main electrical device oil volume. Evacuating may mean to create a vacuum, a lower pressure, and/or to extract at least a part of the material (gas, air, transformer oil, ...).

The described advantages of the aspects are neither limiting nor exclusive to the respective aspects. An aspect might have more advantages, not explicitly mentioned.

The exemplary embodiments disclosed herein are directed to providing features that will become readily apparent by reference to the following description when taken in conjunction with the accompany drawings. In accordance with various embodiments, exemplary systems, methods, devices and computer program products are disclosed herein. It is understood, however, that these embodiments are presented by way of example and not limitation, and it will be apparent to those of ordinary skill in the art who read the present disclosure that various modifications to the disclosed embodiments can be made while remaining within the scope of the present disclosure.

The above and other aspects and their implementations are described in greater detail in the drawings, the descriptions, and the claims.
Fig. 1 shows two exemplary subsea electrical connections not yet connected.
Fig. 2 shows the same subsea electrical connections connected.
Fig. 3 shows two exemplary subsea electrical connections not yet connected in a cross-section.
Fig. 4 shows the same subsea electrical connections connected in a cross-section.
Fig. 5 shows two exemplary subsea electrical connections not yet connected in a perspective view.
Fig. 6 shows the same subsea electrical connections connected in a perspective view.
Figs. 7A to 7F show an exemplary arrangement of the ports with corresponding hydraulic connections.
Figs. 8A and 8B show an exemplary subsea electrical connection with a connection piece.
Figs. 9A and 9B show an exemplary subsea electrical connection with a connection piece in a perspective views.
Figs. 10A and 10B show an exemplary subsea electrical connection with a connection piece in a cross-sections.
0Fig. 11 shows an exemplary subsea electrical connection with three electrical conductors.
Fig. 12 shows a flowchart of a method for connecting two electrical devices with a subsea electrical connection each.
Figs. 13a to 13e show embodiments of flanges with two o-rings, two grooves, and a protrusion or cavity, respectively.
Figs. 14a to 14e show embodiments of flanges with a port and hydraulic connection.

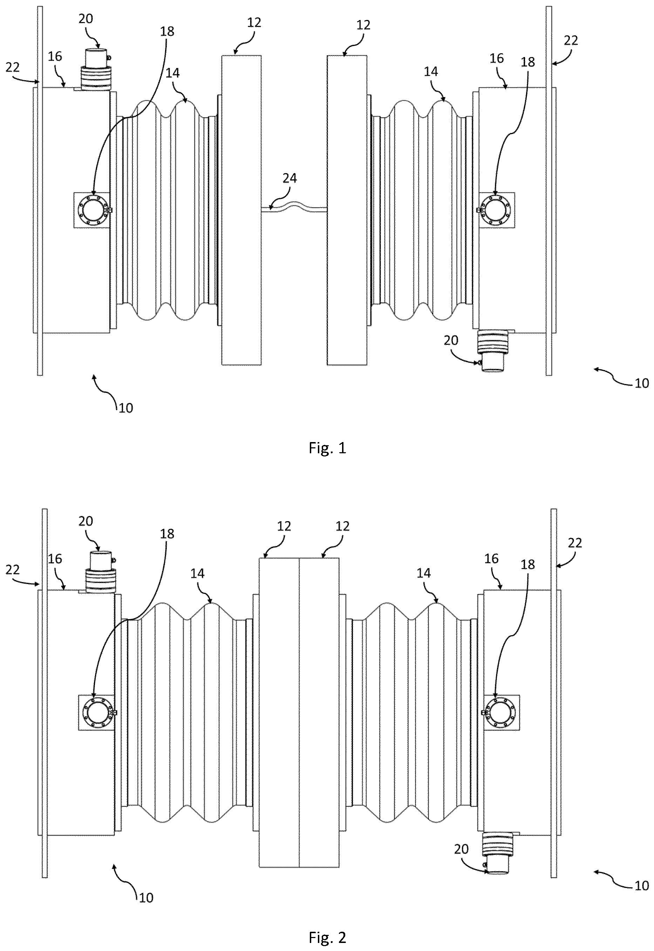

Fig. 1 shows two exemplary subsea electrical connections 10 not yet connected. Fig. 2 shows the same subsea electrical connections 10 connected. The two subsea electrical connections 10 shown in each figure may be identical, or the shown features may be identical. Each subsea electrical connection 10 comprises a flange 12, a second flexible bellow 14, an end part 16, and ports 18 and 20. A wall 22 (for example a tank wall) of an electrical device is also shown. Further, a flexible joint 24 comprised by one of the subsea electrical connections 10 is shown in fig. 1. Each subsea electrical connection 10 may comprise further parts, at least some of which are not shown in these figures. One of the subsea electrical connections 10 explained. This explanation may also apply to the other subsea electrical connection 10, unless otherwise specified. In these figures, the axial direction may be from left to right and the radial direction may be perpendicular to the axial direction (also including from up to down, and coming out of the page and going into the page).

The flange 12 is connected to the second flexible bellow 14 at a side of the subsea electrical connection 10 away from the electrical device and towards the other subsea electrical connection 10. The flanges 12 of the two subsea electrical connections 10 may be connected and fixed to each other, for example by bolds, screws or the like. The flange 12 may comprise holes for screws to connect and fix the flanges 12 together.

The second flexible bellow 14 is connected to the flange 12 and to the end part 16. The second flexible bellow 14 has a cylindrical shell shape extending in axial direction (from left to right) and has a rippled and/or wavy surface. The second flexible bellow 14 made be made of rubber.

The end part 16 has the ports 18 and 20 connected to it. Further, the end part 16 is fixed to the wall 22. It may be possible to remove the end part 16 from the wall. The end part 16 may be a flange too. Alternatively, the end part 16 is unremovably connected to the wall 22, for example being welded to it.

The flexible joint 24 may already connect the electrical conductors of the two subsea electrical connections 10, when the subsea electrical connections 10 are not connected but only aligned and close to each other, as seen in fig. 1. The flexible joint 24 may be electrically conductive. The flexible joint 24 may be comprised by only one of the two subsea electrical connections 10.

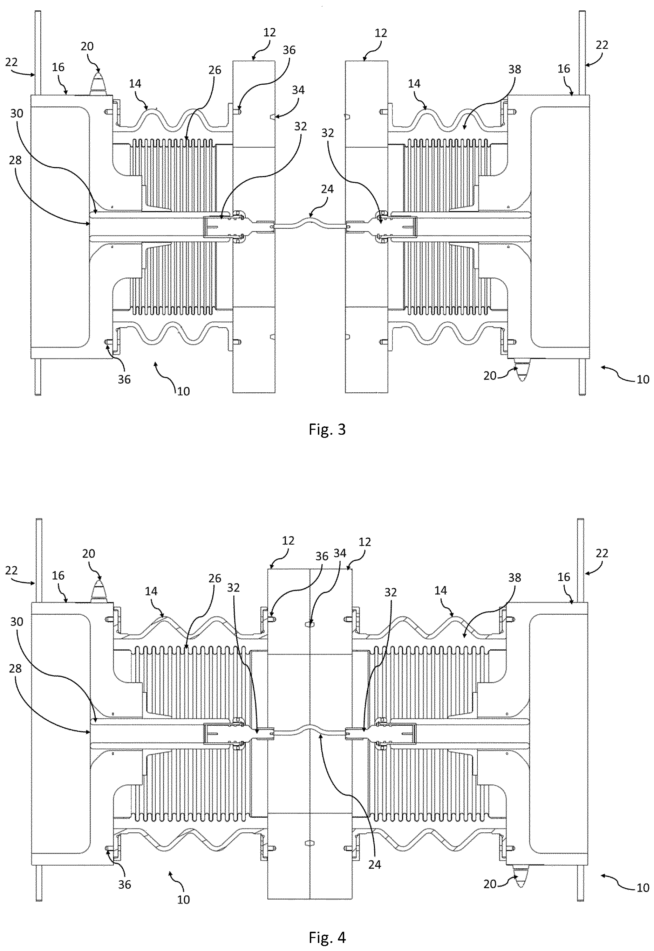

Fig. 3 shows two exemplary subsea electrical connections 10 not yet connected in a cross-section. Fig. 4 shows the same subsea electrical connections 10 connected in a cross-section. The subsea electrical connections 10 of figs. 3 and 4 may be the same subsea electrical connections 10 as shown in figs. 1 and 2. To avoid repetitions, it is herewith referred to the explanation of figs. 1 and 2 and the explanations of part above. Each of the subsea electrical connections 10 further comprise a first flexible bellow 26, an electrical conductor 28, an insulation 30, a bushing 32, a groove 34 for an o-ring, bolts 36, and a space 38. Not all reference signs have been added to both subsea electrical connections 10. The skilled person will understand that the same reference signs may apply to both subsea electrical connections 10.

The first flexible bellow 26 may be made of metal. It may be welded to the flange 12 and to the end part 16. The first flexible bellow 26 has a rippled cylindrical shell shape with ripples closer together than in the second flexible bellow 14.

The electrical conductor 28 is connected to the electrical device on one side (no further detail shown in the figures), and to the bushing 32 and flexible joint 24 on the other side. The electrical conductor 28 is configured to conduct electricity. It (together with the other electrical conductor 28, the bushings 32 and the flexible joint 24) is configured to electrically connect the electrical devices.

The insulation 30 insulates the electrical conductor 28 from the outside in the radial direction. It surrounds the electrical conductor 28 in the radial direction.

The bushing 32 is connected to one end of the electrical conductor 28. The bushing 32 may be rigid and/or a copper pin. When the subsea electrical connections 10 are connected, as in fig. 4, the electrical conductor 28 may be pushed inwards with the bushing 32 and an electrical connection is created by the bushings touching. The flexible joint 24 may help to align the subsea electrical conductors 28 and connect the bushings 32.

The groove 34 for an o-ring is positioned at the open side of the flange 12. The grooves 34 of the connected subsea electrical connections 10 align to include the o-ring. The o-ring may improve sealing and alignment. There may be an autoclave plug at the flange 12 for sealing the test port between the HX seal and the o-ring. The groove 34 and the o-ring may be part of an SPO HX metal seal and o-ring seal to enable HX seal verification from an outer barrier (first and/or second flexible bellow).

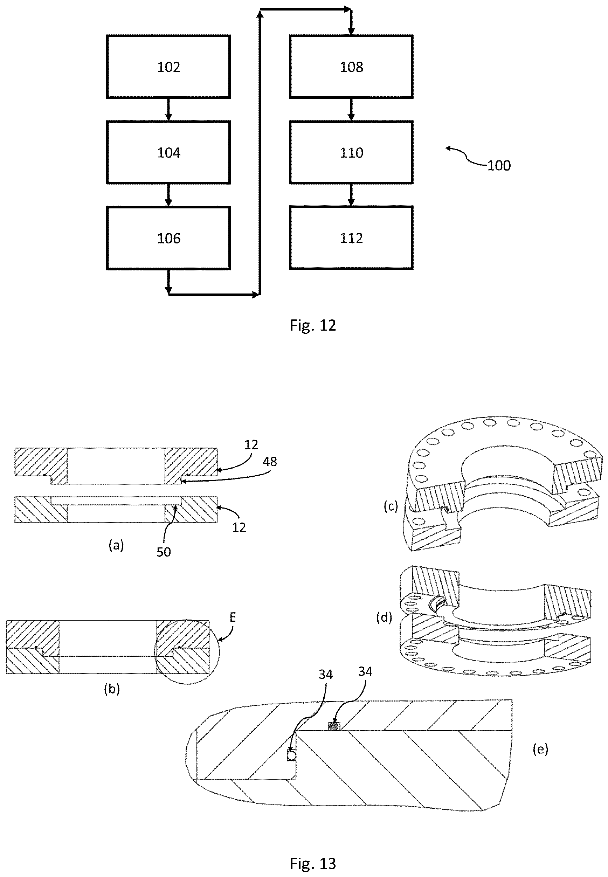

There may be two o-rings: one axial and one radial on the same flange 12. An embodiment of this is shown in figs. 13a to 13e. Fig. 13a shows two flanges 12 of two subsea electrical connections 10 in the not connected state. Fig. 13b shows the two flanges 12 in the connected state. Figs. 13c and 13d show the flanges in perspective view. Fig. 13e shows a close up view of the part labelled "E" in fig. 13b. It can be seen that the respective flanges 12 are different.

While the flange 12 of one subsea electrical connection 10 has a protrusion 48, the flange 12 of the other subsea electrical connection 10 has a corresponding cavity 50. The surface of the flange 12 with cavity 50 may comprise two grooves 34. O-rings are located in the grooves 34. This embodiment with two o-rings, as well as a protrusion 48 and cavity 50, improves sealing. In examples, either the o-rings with grooves 34, or the different flanges with protrusion 48 / cavity 50 are incorporated.

In other embodiments, the flanges 12 may be flat. This can be seen, for example, in fig. 3.

Back to figs. 3 and 4. The bolts 36 connect the second flexible bellow 14 to the flange 12 and to the end part 16. Alternatively to the bolts 36, the second flexible bellow 14 may be connected by screws, glue, welding (if the second flexible bellow 14 is made of metal), or other means.

The (second) space 38 is enclosed by the first flexible bellow 26 and the second flexible bellow 14 in radial direction, and by the end part 16 and the flange 12 in axial direction. The (second) space 38 may be filled with transformer oil. Some or all of the ports 18 and 20 may be connected to hydraulic connection connected to the (second) space 38. In embodiments, the (second) space 38 is connected to inner oil volumes of the electrical device, meaning that the end part 16 leaves an opening between the (second) space 38 and the inner oil volumes.

There is another (first) space (not shown in figs. 1 to 4) enclosed by the first flexible bellow 26 and the electrical conductor 28/insulation 30 in radial direction, and by the end part 16 and the flange 12 in axial direction. In some embodiments, the other (first) space is connected to inner oil volumes of the electrical device, meaning that the end part 16 leaves an opening between the other (first) space and the inner oil volumes. Preferably, the two spaces are not connected, so that no material (like transformer oil) in one space can move to the other space.

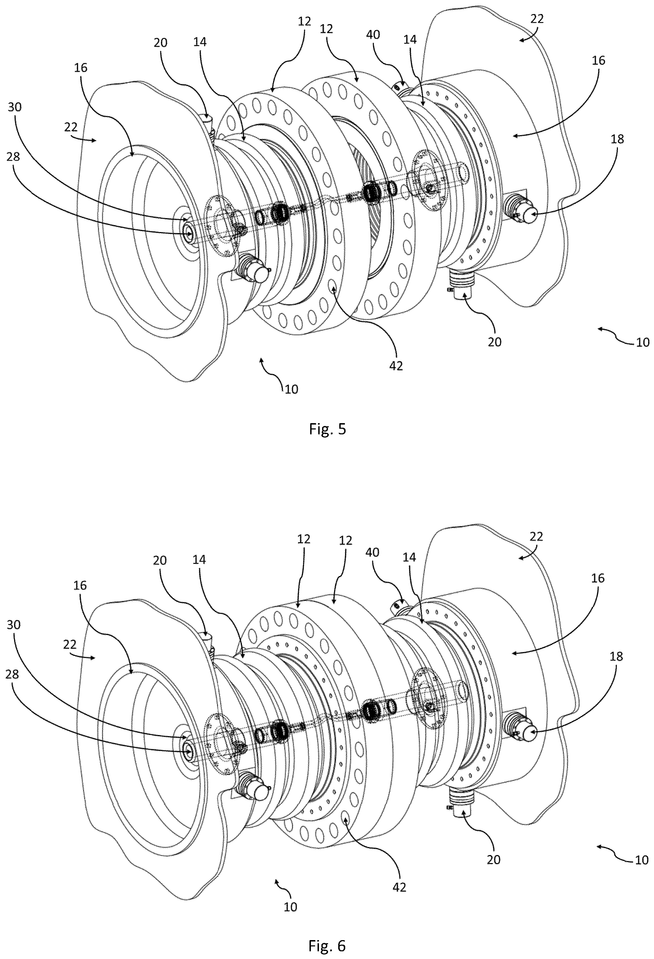

Fig. 5 shows two exemplary subsea electrical connections 10 not yet connected in a perspective view. Fig. 6 shows the same subsea electrical connections 10 connected in a perspective view. The subsea electrical connections 10 of figs. 5 and 6 may be the same subsea electrical connections 10 as shown in any of figs. 1 to 4. To avoid repetitions, it is herewith referred to the explanation of figs. 1 to 4 and the explanations of part above. Parts drawn with dotted lines are positioned underneath the parts drawn with solid lines. For better visibility, reference signs for the parts drawn with dotted lines were omitted. The skilled person understands which parts they are, also when looking at the other figures of this disclosure. The subsea electrical connection 10 further comprise port 40, and holes 42. The holes 42 are in the flanges 12. Screws may be threaded through the holes 42 (of both flanges 12) to connect the flanges 12 and lock them together.

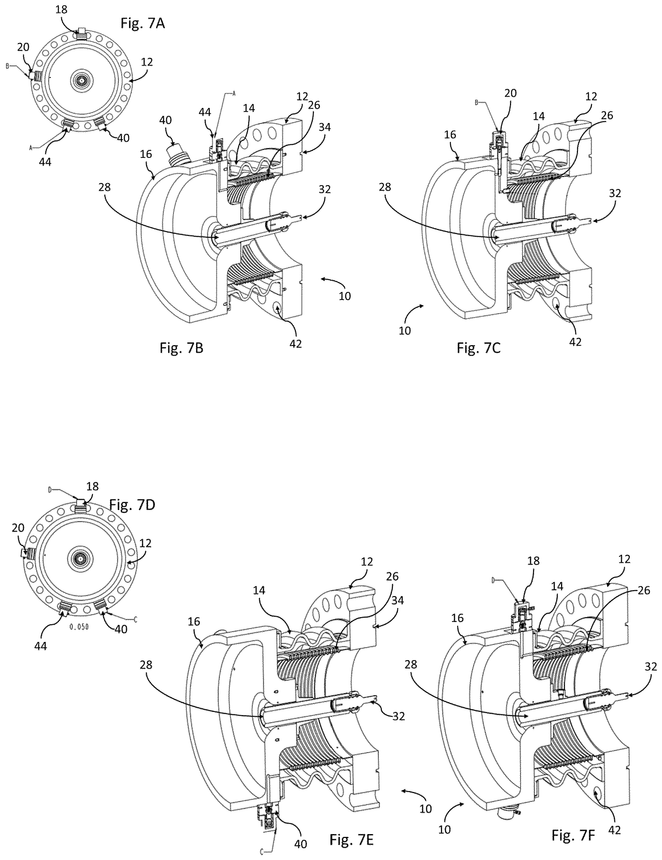

Figs. 7A to 7F show an exemplary subsea electrical connection 10. While figs. 7A and 7D show cross sections of the subsea electrical connection 10 for orientation, figs. 7B, 7C, 7E and 7F show cross sections of the subsea electrical connections 10 in perspective views. The subsea electrical connections 10 of figs. 7A to 7F may be the same subsea electrical connections 10 as shown in any of figs. 1 to 6. To avoid repetitions, it is herewith referred to the explanation of figs. 1 to 4 and the explanations of part above. The subsea electrical connection 10 further comprises a port 44.

Figs. 7A to 7F show an exemplary arrangement of the ports 18, 20, 40 and 44 with corresponding hydraulic connections. The ports 18, 20, 40 and 44 are positioned at the end part 16 and radially arranged at specific angles (see especially figs. 7A and 7D). The radial arrangement may alternatively be done at different angles.

In embodiments, the port 44 (also with letter A in the figs.) is a vacuum port for the first space (inner bellow chamber between first flexible bellow and electrical conductor). It may enable (transformer) oil filling after connection.

In embodiments, the port 20 (also with letter B in the figs.) is a filling port with externally operated able operation to enable oil from the main tank.

In embodiments, the port 40 (also with letter C in the figs.) is a filling port for the second space (bellow intermediate space between the first and second flexible bellow).

In embodiments, the port 18 (also with letter D in the figs.) is a vacuuming port for the second space (bellow intermediate space between the first and second flexible bellow) to enable oil filling after connecting.

Ports 44 and 20 may be first valve(s), as explained above. A first hydraulic connection can be seen in fig. 7B connecting port 44 to the first space. Another first hydraulic connection can be seen in fig. 7B connecting port 20 to the first space. In embodiments, ports 44 and 20 may be one port with one first hydraulic connection. Ports 40 and 18 may be second valve(s), as explained above. A second hydraulic connection can be seen in fig. 7E connecting port 40 to the second space. Another second hydraulic connection can be seen in fig. 7F connecting port 18 to the second space. In embodiments, ports 40 and 18 may be one port with one first hydraulic connection.

All ports may have a double barrier sealing with an inner cap, a metal seal and outer cap o-ring sealed. Caps may have a helium test port for final helium testing after sealing. Oil can be either from the main tank volume or from an outside container.

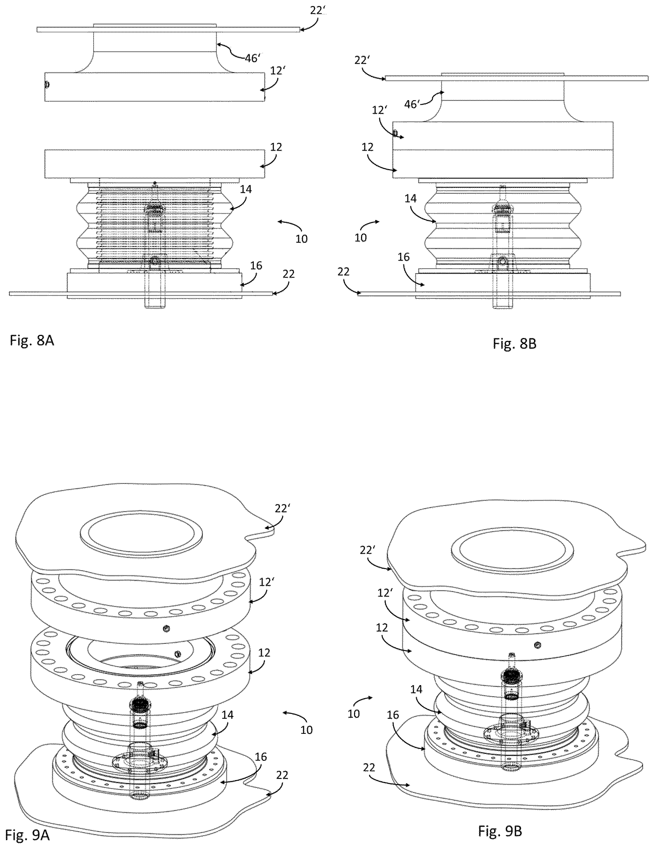

Figs. 8A and 8B show an exemplary subsea electrical connection 10 with a connection piece. The subsea electrical connection of figs. 8A and 8B may be any one of the subsea electrical connections 10 in figs. 1 to 7F. To avoid repetitions, it is herewith referred to the explanation of figs. 1 to 7F and the explanations of part above. Parts drawn with dotted lines are positioned underneath the parts drawn with solid lines. For better visibility, reference signs for the parts drawn with dotted lines were omitted. The skilled person understands which parts they are, also when looking at the other figures of this disclosure.

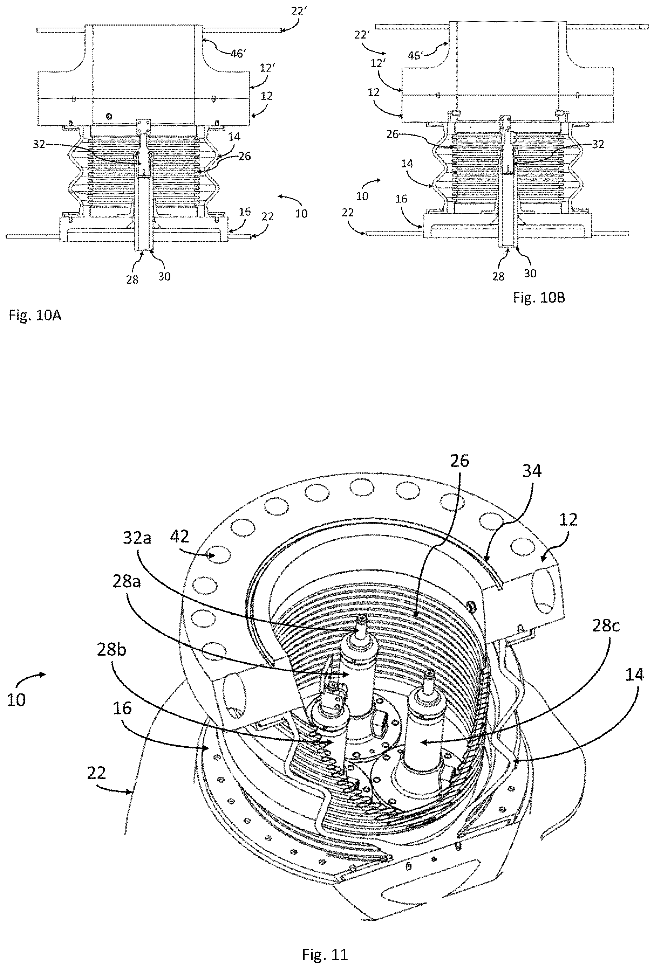

The subsea electrical connection 10 is connected to a connection piece. The connection piece comprises a wall 22', a flange 12' and an end piece 46'. The flange 12' may be as the flange 12 of any subsea electrical connection 10. The connection piece may be part of an electrical device. The end piece 46' may be part of the flange 12' (see especially in figs. 10A and 10B). The connection piece may comprise some electrical conductor to which the electrical conductor 28 of the subsea electrical connection 10 can connect. With this setup, only one subsea electrical connection 10 is needed. This saves resources.

Figs. 9A and 9B show an exemplary subsea electrical connection 10 with a connection piece in a perspective views. The systems of figs. 9A and 9B may be the same systems as shown in figs. 8A and 8B. To avoid repetitions, it is herewith referred to the explanation of figs. 8A and 8B and the explanations of part above.

Figs. 10A and 10B show an exemplary subsea electrical connection 10 with a connection piece in a cross-sections. The systems of figs. 10A and 10B may be the same systems as shown in figs. 8A to 9B. To avoid repetitions, it is herewith referred to the explanation of figs. 8A to 9B and the explanations of part above.

Fig. 10B shows an alternative arrangement of the hydraulic connections. The hydraulic connections connect the second space with the inside of the flange 12. The inside of the flange 12 may connect to the first space. The ports 52 and 54 may be connected to the hydraulic connections. The ports 52 and 54 are openable and can enable the oil filling of the second space. The ports 52 and 54 may be sealed with autoclave plugs after oil filling. The port 52 may be for creating a vacuum and the port 54 may be for filling the second space with oil. In an alternative, this arrangement may connect to an pressure/volume compensation system of the electrical device.

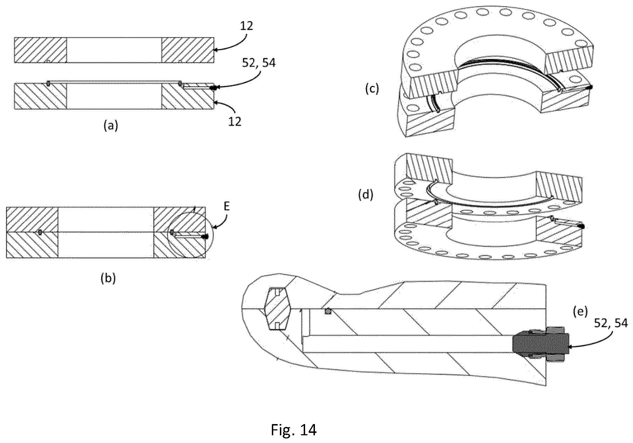

An embodiment of this is shown in figs. 14a to 14e. Fig. 14a shows two flanges 12 of two subsea electrical connections 10 in the not connected state. Fig. 14b shows the two flanges 12 in the connected state. Figs. 14c and 14d show the flanges in perspective view. Fig. 14e shows a close up view of the part labelled "E" in fig. 14b. One of the flanges 12 has a port 52 or 54 and a hydraulic connection.

Back to figs. 10A and 10B. This disclosure also comprises one embodiment of a subsea electrical connection 10 with flanges 12 on both axial ends. This subsea electrical connection 10 may be configured to be connected between two other subsea electrical connections 10 and/or between one subsea electrical connection 10 and connection piece and/or between two connection pieces.

Fig. 11 shows an exemplary subsea electrical connection 10 with three electrical conductors 28a to 28c. The systems of fig. 11 may be similarto systems as shown in figs. 1 to 10B. To avoid repetitions, it is herewith referred to the explanation of figs. 1 to 10B and the explanations of part above. The difference to the other embodiments is the three electrical conductors 28a to 28c. Correspondingly, each of the three electrical conductors 28a to 28c has a bushing 32 connected to it (in fig. 11, only bushing 32a is explicitly labelled with a reference signs. However, corresponding bushings 32b and 32c can be seen without reference sign). This embodiment may implement a three phase subsea electrical connection 10.

In some embodiments, two electrical devices are connected at two points: at one point one or two subsea electrical connections 10 with three phases connect the two electrical devices; at another point, one or two subsea electrical connections 10 with one electrical connection 28 being configured as a ground line connect the two electrical devices. Alternatively, it is possible two have two one-phase connections between the two electrical devices.

Fig. 12 shows a flowchart of a method 100 for connecting two electrical devices with a subsea electrical connection 10 each, the method 100 comprises several steps. In step 102, the two electrical devices are placed besides each other. In step 104, one end of each of the subsea electrical connection 10 are flexed to make the ends connect. The ends may be flanges 12. In step 106, the ends are locked into connection.

The whole method may be without welding. The method 100 may further comprise further steps. In step 108, a (first and/or second) space in the subsea electrical connection is evacuated through a (first and/or second) hydraulic connection. In step 110, the space is filled with oil through the hydraulic connection. In step 112, pressure and/or volume is compensated through the hydraulic connection. Especially steps 108 to 112 may be implemented independent of each other.

In an alternative, one subsea electrical connection 10 is connected to a connection piece (see also figs. 8A to 10B) with a method similar to method 100.

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein, but is to be accorded the widest scope consistent with the novel features and principles disclosed herein, as recited in the claims below.

## Claims

1. A subsea electrical connection (10) comprising:
an electrical conductor (28) extending along an axial direction of the electrical conductor; and
a first flexible bellow (26) surrounding the electrical conductor (28) in a radial direction perpendicular to the axial direction, wherein an inner surface of the first flexible bellow (26) is spaced apart from the electrical conductor (28) in the radial direction.

2. Subsea electrical connection (10) according to claim 1, wherein the first flexible bellow (26) has a shape of a rippled cylinder shell.

3. Subsea electrical connection (10) according to claim 1 or 2, further comprising a insulation (30) directly surrounding the electrical conductor (28) in the radial direction; and/or
wherein the first flexible bellow (26) is made of metal.

4. Subsea electrical connection (10) according to any one of claims 1 to 3, further comprising a second flexible bellow (14) surrounding the first flexible bellow (26) in the radial direction;
preferably wherein the second flexible bellow (14) is made of rubber.

5. Subsea electrical connection (10) according to any one of claims 1 to 4, further comprising a conductive flexible joint (24) positioned at the electrical conductor (28) at one end in the axial direction.

6. Subsea electrical connection (10) according to any one of claims 1 to 5, further comprising two end parts (16) connected to the first flexible bellow (26) at opposite ends of the first flexible bellow (26) in axial direction;
preferably wherein one of the two end parts (16) is a flange (12).

7. Subsea electrical connection (10) according to claim 6, when dependent on claim 4, wherein the first flexible bellow (26) and the second flexible bellow (14) are each connected to each of the two end parts (16) to enclose a space (38).

8. Subsea electrical connection (10) according to any one of claims 1 to 7, further comprising a first hydraulic connection with a first valve, wherein one end of the first hydraulic connection connects to a space (38) between the electrical conductor (28) and the first flexible bellow (26).

9. Subsea electrical connection (10) according to claim 4 or any one of claims 5 to 8 when dependent on claim 4, wherein the subsea electrical connection (10) further comprises a second hydraulic connection with a second valve, wherein one end of the second hydraulic connection connects to a space (38) between the first flexible bellow (26) and second flexible bellow (14).

10. Subsea electrical connection (10) according to any one of claims 1 to 9, further comprising a helium test port for Helium testing after sealing; and/or
wherein the first flexible bellow (26) has a length of 490 mm, and a diameter of 560 mm; and/or
wherein the subsea electrical connection (10) further comprises two further electrical conductor (28) surrounded by the first flexible bellow (26) in the radial direction.

11. System comprising a subsea electrical connection (10) according to any of claims 1 to 10 and an electrical device, wherein one end of the subsea electrical connection (10) is connected to the electrical device, and preferably wherein the electrical device is a transformer, a reactor, a switchgear, a pump, or an electrical motor of a pump or compressor or other device.

12. System according to claim 11, further comprising a pressure compensator, wherein the pressure compensator is connected to the subsea electrical connection (10) and the electrical device, and wherein the pressure compensator is configured to simultaneously compensate pressure of the electrical device and the subsea electrical connection.

13. Method (100) for connecting two electrical devices with a subsea electrical connection (10) each, the method (100) comprising:
placing (102) the two electrical devices besides each other;
flexing (104) one end of each of the subsea electrical connection (10) to make the ends connect; and
locking (106) the ends into connection.

14. Method (100) according to claim 13, wherein locking the ends is done without welding.

15. Method (100) according to claim 13 or 14, the method (100) further comprising:
evacuating (108) a space (38) in the subsea electrical connection (10) through an hydraulic connection;
filling (110) the space (38) with oil through the hydraulic connection; and
compensating (112) pressure and/or volume through the hydraulic connection.
